# FASCICULE DE BREVET EUROPEEN

(11) **EP 3 400 096 B1**
(45) Date de publication et mention de la délivrance du brevet: **17.07.2024**
(21) Numéro de dépôt: 17705161.2
(22) Date de dépôt: 05.01.2017
(51) Int. Cl.: B01F 33/84, B01F 25/451, B01F 35/71, G06Q 30/0601

(54) **PROCEDE ET DISPOSITIF AVEC INTERFACE POUR LA FABRICATION D'UN COSMÉTIQUE PRODUIT PERSONNALISE**
VERFAHREN UND VORRICHTUNG MIT SCHNITTSTELLE ZUR HERSTELLUNG EINES PERSONALISIERTEN KOSMETISCHEN PRODUKTS
METHOD AND DEVICE WITH INTERFACE FOR MANUFACTURING A CUSTOMISED COSMETIC PRODUCT

(30) Priorité: 05.01.2016 FR 1600018
(43) Date de publication de la demande: 14.11.2018
(73) Titulaire: L'OREAL, 75008 Paris (FR)
(72) Inventeur: LELOUP, David, 10000 Troyes (FR)
(74) Mandataire: Touroude, Magali Linda
(86) Numéro de dépôt international: PCT/FR2017/000006
(87) Numéro de publication internationale: WO 2017/118803

(56) Documents cités:
- WO-A1-01/75586
- WO-A1-2009/117797
- WO-A1-2014/061989
- WO-A1-2017/095853
- WO-A1-2017/103634
- FR-A1- 2 937 512
- FR-A1- 2 998 193
- US-A1- 2008 311 061
- US-B1- 8 593 634

## Description

La présente invention concerne un dispositif pour la fabrication d'un produit cosmétique personnalisé, par mélange d'au moins deux composants logés dans un contenant respectif, au moins un des contenants étant une capsule (103), et au moins un autre contenant étant un pot (11) comprenant un embout, au moins un desdits contenant comportant un code d'identification, ledit dispositif comprenant une interface de collecte de données personnalisées, par exemple sur un téléphone mobile ou une tablette. L'invention concerne également un procédé pour fabriquer un produit cosmétique personnalisé par mélange de manière homogène de composants, à partir de données personnalisées de l'utilisateur.

Le document FR 2 998 193 A1 divulgue un dispositif selon le préambule de la revendication 1.

La présente invention concerne en premier lieu un dispositif pour la fabrication d'un produit cosmétique personnalisé selon la revendication 1.

De manière préférée selon la présente invention, l'interface et le dispositif de traitement des données sont dans une unité de commande qui comporte une mémoire qui stocke lesdites données personnalisées et/ou instructions pour la fabrication du produit personnalisé.

De manière préférée selon la présente invention, l'unité de commande est choisi parmi un téléphone mobile, une montre à écran tactile de préférence connecté à internet, une tablette tactile ou un ordinateur.

De manière préférée selon la présente invention, le dispositif de fabrication comprend un dispositif de traitement d'instructions de fabrication pour récupérer lesdites instructions de fabrication de produit personnalisé et communiquer automatiquement lesdites instructions concernant les composants et/ou leurs quantités au dispositif de sélection et de dosage (44) d'au moins un composant de base contenu dans un pot (11) .

Les composants sont des composants cosmétiques.

Lesdits au moins deux composants cosmétiques comprennent de manière encore préférée:
- au moins un composants de base, et
- au moins un, deux, trois, quatre, cinq ou au moins six composants actifs.

Par composants on entend désigner selon la présente invention des liquides de viscosité pouvant être de viscosité différentes et pouvant aller de 1 centipoise ou 1 mPa.S (comme de l'eau par exemple) à 500 000 mPa.s (comme du beurre à 10°C, viscosité mesurée avec Brookfield DVIII Ultra, aiguille F, Vitesse 1.5), ainsi que des poudres, dont la granulométrie maximale est définie par la taille des orifices d'entrée X et X' et des orifices 110, de manière à ne pas les boucher. Préférentiellement on sélectionne au moins un composé sous forme liquide. Il peut par exemple s'agir de mélange de peinture liquide et de pigments en poudre, de mélange de précurseur de coloration capillaire, par exemple un oxydant, une base et un coupleur pour obtenir une composition de coloration capillaire, de mélange de deux fond de teint cosmétique de couleur différente pour obtenir un fond de teint de la couleur recherchée, de mélange d'une base de crème cosmétique et d'un ou plusieurs actif(s), ou encore de mélange d'un fond de sauce alimentaire et d'un arôme liquide, ou de mélange d'un alcool alimentaire, d'un jus de fruit et d'un sirop alimentaire ou liqueur pour la fabrication d'un cocktail.

De manière avantageuse selon l'invention les au moins deux composants sont au moins deux composants cosmétiques, de préférence au moins un composant de base et au moins un, deux, trois, quatre, cinq, ou au moins six composants actifs. De manière particulièrement préférée, les au moins deux composants sont au moins un composant de base et au moins un, deux, ou trois composant actif.

Par « composant de base », on entend un composant cosmétique dont le but est d'apporter une texture particulière (crème, sérum, huile, etc.) au produit cosmétique. Il peut s'agir d'un seul ingrédient (par exemple de l'huile d'amande douce) ou plusieurs ingrédients (par exemple de l'eau, de l'huile d'amande douce et un émulsionnant) pour obtenir ladite texture particulière.

Par « composant actif », on entend un composant cosmétique dont le but est d'apporter au moins une activité particulière (anti-âge, hydratant, antioxydant, etc.). Il peut s'agir d'un seul ou de plusieurs principes actifs combinés pour obtenir ladite activité particulière.

### Avantages techniques :

Le dispositif selon l'invention permet d'obtenir, dans un délai rapide, de préférence inférieur à 30 secondes, encore préférentiellement inférieur à 15 secondes, un mélange d'au moins deux composants cosmétiques qui est parfaitement homogène, même s'il est préparé en faible quantité (typiquement de l'ordre du cm³ ou moins), le tout en bénéficiant d'un très faible encombrement et d'une grande robustesse à l'usage.

L'utilisation de capsule (103) permet un pré-dosage des composants cosmétiques, en particulier des composants actifs, sans manipulation de l'utilisateur, une combinaison aisée des composants, de préférence cosmétiques, puisqu'il suffit d'ajouter autant de capsules que l'on souhaite combiner de composant, de préférence cosmétique, en particulier de composant actifs, dans son produit de préférence cosmétique, personnalisé, et une conservation optimale du produit cosmétique, personnalisé, le mélange étant réalisé extemporanément, de préférence au moment de l'utilisation.

En effet les composants cosmétiques, contenus dans les capsules (103), en particulier les composants actifs, sont protégés notamment d'une éventuelle contamination bactérienne, oxydation ou dégradation par les UV.

L'utilisation du dispositif de sélection et de dosage (44) comprenant un dispositif (111) de support de pot (11) et un dispositif d'impulsion (45) permet d'obtenir un dosage des composants cosmétiques de base, sans manipulation de l'utilisateur, une combinaison aisée des composants cosmétiques, puisqu'il suffit de sélectionner les composants que l'on souhaite combiner, en particulier de composant de base et de composant actifs dans son produit cosmétique personnalisé, le dispositif selon l'invention réalisant automatiquement le dosage et le mélange desdits composants, avec une conservation optimale du produit cosmétique, personnalisé.

Ainsi les composants cosmétiques, contenus dans les contenants (11) et/ou dans les capsules (103), sont protégés notamment d'une éventuelle contamination bactérienne par contact cutané, l'utilisateur ne touchant pas le contenu du pot (11). L'utilisation de tels pot (11) et/ou capsules (103) permet par exemple de limiter ou de ne pas ajouter de conservateur chimique aux composants contenus dedans, ce qui est un avantage pour les consommateurs qui recherchent des produits sans ou avec le moins possible de conservateurs.

En effet ces conservateurs chimiques sont de plus en plus rejetés par les consommateurs à cause de leurs effets secondaires négatifs pour la peau, des questions quant à leur nocivité sur la santé et/ou l'environnement.

En particulier, ce dispositif permet de réaliser un produit personnalisé, sur mesure pour un utilisateur, grâce aux données personnalisées de l'utilisateur collectées via l'interface. De manière avantageuse, l'utilisation d'une unité de commande capable de récupérer automatiquement les informations de l'utilisateur et de l'environnement dans lequel il évolue, par exemple par géolocalisation, telle qu'un téléphone mobile connecté à internet, une montre connectée à internet, ou une tablette connectée à internet, permet d'obtenir un produit particulièrement personnalisé à l'utilisateur. En outre, le stockage des données permet un suivi de l'utilisateur, de ces habitudes de vie, des produits personnalisés déjà utilisés et donc de proposer des formules de produit personnalisé et recommandations toujours plus adaptées audit utilisateur.

De manière avantageuse, les informations personnalisées comprennent l'âge de l'utilisateur, le sexe de l'utilisateur, le nombre d'heure de sport par jour ou par semaine de l'utilisateur, le nombre d'heure de sommeil par nuit de l'utilisateur, la température de l'environnement où évolue l'utilisateur, le taux d'hygrométrie de l'environnement où évolue l'utilisateur, le taux de pollution de l'environnement où évolue l'utilisateur, et/ou les caractéristiques de la peau de l'utilisateur.

Par caractéristiques de la peau de l'utilisateur, on entend notamment désigner selon la présente invention le type de peau de l'utilisateur (tel que peau sèche, peau grasse, peau mixte, ou peau normale) , le phototype de la peau de l'utilisateur, la couleur de la peau, l'éclat du teint (tel que teint terne, ou teint lumineux), la sensibilité de la peau de l'utilisateur, la présence de rides et/ou ridules sur la peau de l'utilisateur, la présence de tâches sur la peau de l'utilisateur, l'éventuel manque de fermeté de la peau de l'utilisateur, et/ou la présence de cernes et/ou poches sur la zone du contour de l'aeil.

De manière supplémentaire, les données personnalisées selon l'invention comprennent le bénéfice beauté souhaité dans le cas d'un produit cosmétique personnalisé (tel que action anti-âge, action anti-tâche, hydratation de la peau).

### Dispositif de mélange (51)

Le dispositif pour la fabrication et la distribution d'un produit cosmétique personnalisé selon l'invention comprend, en outre du dispositif de mélange (51), au moins deux contenants (11, 103) logeant respectivement chacun des au moins deux composants cosmétiques. Ce dispositif de fabrication et de distribution comprend avantageusement autant de contenants que de composants cosmétiques. De manière préférée, les composants actifs sont contenus dans les contenants (103) et les composants de base sont contenus dans les contenants (11). Egalement de manière avantageuse, les contenants des composants de base comprennent un orifice de sortie.

A titre de moyen de transfert du composant cosmétique actif, vers ledit dispositif de mélange (51), le dispositif selon l'invention pourra comprendre au moins une vanne principale 56 apte, dans une de ses positions, à mettre en communication une aiguille creuse (90) avec ledit dispositif de mélange (51), dans une de ses positions à obstruer l'orifice du dispositif de mélange (51) pendant la phase de mélange, dans une autre de ses positions à mettre en communication le canal de lavage avec le dispositif de mélange (51) et au moins une deuxième vanne principale 56' apte à fournir ledit produit cosmétique à un utilisateur par l'intermédiaire d'une buse de fourniture. Par vanne, on entend désigner selon la présente invention notamment des vannes à diaphragme, vannes à glissière, vannes à pincement, vannes à guillotine ou vannes à boule, de préférence des vannes à glissière.

De manière préférée selon l'invention, le dispositif pour la fabrication et la distribution d'un produit cosmétique, personnalisé comprend en outre un dispositif de nettoyage dudit dispositif de mélange comprenant
a. un réservoir d'eau relié à l'orifice d'entrée X, permettant l'entrée de l'eau dans le réceptacle 52 du dispositif de mélange 51,
b. une gouttière reliant l'orifice d'entrée et de sortie X' à un bac de récupération permettant l'évacuation du réceptacle 53 de l'eau issue du lavage,
c. un dispositif Y creux de forme circulaire reliant l'orifice d'entrée X à un bac de récupération de l'eau issue du lavage permettant l'évacuation du réceptacle 52 de l'eau issue du lavage.

De manière similaire, on parlera selon la présente invention de nettoyage ou de lavage.

De manière avantageuse, l'eau pour le nettoyage peut être chauffée préalablement pour un meilleur nettoyage, ou peut être remplacée ou additionnée d'un agent nettoyant tel qu'un agent antibactérien et/ou un détergent. L'eau pour le nettoyage peut par exemple être additionnée de soude, le dispositif étant ensuite rincé dans une étape supplémentaire à l'eau claire.

De manière préférée, le dispositif de mélange (51) du dispositif selon l'invention est caractérisé en ce qu'au moins un orifice d'entrée (X) est compris dans le réceptacle (52) et est destiné à l'entrée des au moins un composant cosmétique actif et en ce que au moins un autre orifice d'entrée (X) est compris dans le réceptacle (53) et est destiné à l'entrée des au moins un composant cosmétique de base et à la sortie du mélange des au moins 2 composants cosmétiques obtenu, ledit orifice - (X) d'entrée et de sortie étant nommé (X').

De manière avantageuse, le dispositif de mélange (51) du dispositif selon l'invention comprend un nombre réduit d'orifice, permettant de limiter le nombre d'orifices à nettoyer et les risques d'occlusion. Ainsi ce dispositif de mélange (51) ne comprend pas un orifice de sortie dédié, mais un des orifice d'entrée (X') permet à la fois l'entrée d'au moins un composant et la sortie du mélange des au moins deux composants obtenu.

Les réceptacles du dispositif de mélange (51) du dispositif selon l'invention peuvent être de forme variées, cylindrique, ovale, cubique, sphérique, rectangulaire. De manière préférée, ces réceptacles sont de forme ovale ou cylindrique, ce qui facilite leur nettoyage et le mélange homogène.

Les réceptacles de forme ovale ont l'avantage technique d'un encombrement plus faible du dispositif de mélange que les réceptacles de forme cylindrique. Ils permettent de ce fait d'obtenir également un dispositif de fabrication et de distribution de produit selon l'invention avec un encombrement plus faible qu'avec d'autres formes comme par exemple une forme cylindrique.

Ces réceptacles doivent posséder chacun un orifice (110) et un conduit 55 les reliant afin de permettre le mélange des au moins deux composants. Toutefois il n'y a pas de contrainte technique à la position de ces réceptacles l'un par rapport à l'autre, ces réceptacles pouvant être par exemple soient espacés, superposés, placés face à face ou parallèlement.

En outre le conduit 55 peut être formé par une vanne 57 reliant les 2 orifices et permettant d'ouvrir et de fermer lesdits orifices.

Selon un aspect de l'invention, les réceptacles du dispositif de mélange peuvent être des poches souples. Ces poches sont de préférence en plastique souple, en particulier élastique.

De manière préférée selon l'invention, l'orifice d'entrée X est compris dans le réceptacle 52 et est destiné à l'entrée des au moins un composant cosmétique actif et l'orifice d'entrée X' est compris dans le réceptacle 53 et est destiné à l'entrée des au moins un composant cosmétique de base et à la sortie du mélange des au moins 2 composants cosmétiques, obtenu.

De manière préférée selon l'invention, ledit dispositif permettant de faire varier alternativement le volume disponible des réceptacles 52 et 53, de manière préférée lesdits pistons 50, sont animés par un actionneur.

Egalement dans un mode de réalisation particulier, le dispositif de mélange selon l'invention comprend au moins une vanne 57.

Egalement dans un mode de réalisation particulier, le dispositif de mélange (51) du dispositif selon l'invention comprend au moins deux vannes principales 56 et 56' et au moins une vanne auxiliaire 57. De préférence les vannes sont munie de deux perçages chacune. De préférence, le dispositif comprend deux vannes principales 56 et 56' et une vanne auxiliaire 57 munie de deux perçages chacune.

Ces au moins trois vannes 56, 56' et 57 ainsi percées permettent notamment d'assurer le nettoyage dudit dispositif sans qu'il soit besoin d'y ajouter une pompe à eau, ni de gicleurs alimentés par ladite pompe à eau pour amener de l'eau dans le dispositif. C'est le dispositif de mélange (51) qui va aspirer lui même l'eau nécessaire à son nettoyage, grâce auxdites vannes et au dispositif permettant de faire varier alternativement le volume disponible des réceptacles 52 et 53, de préférence par le mouvement du piston, dans une étape d'auto-nettoyage.

De manière particulièrement préférée selon l'invention, les au moins 3 vannes 56, 56' et 57 du dispositif de mélange (51) du dispositif selon l'invention sont des vannes à glissière, de préférence des vannes à guillotine.

De telles vannes permettent d'optimiser l'étanchéité du dispositif, et d'obtenir une très bonne étanchéité notamment considérablement améliorée par rapport à l'utilisation d'autres vannes classiquement utilisées par l'homme du métier, en particulier des vannes à coulisseau. Cette étanchéité améliorée permet l'étape d'auto-nettoyage du dispositif de mélange 51, sans pompe à eau, avec toute l'étanchéité requise.

En particulier, ces vannes à glissière sont entraînées en translation, et non en rotation comme le sont les vannes à coulisseau.

De manière préférée selon l'invention, le dispositif de mélange (51) du dispositif selon l'invention comprend une vanne auxiliaire 57 munie d'au moins deux perçages coulissant dans un conduit ménagé dans le dispositif de mélange (51) et ladite vanne 57 est susceptible d'être entraînée en translation par un système de crémaillère 61, de préférence actionnées par un moteur 62, et apte à contrôler l'écoulement entre lesdits deux réceptacles 52 et 53.

L'utilisation de crémaillères permet d'entraîner lesdites vannes dans un mouvement de translation, tout en permettant de conserver un encombrement minimal audit dispositif.

De manière préférée, la vanne 56 possède 2 perçages, coulissant dans un conduit ménagé dans le dispositif de mélange (51), l'un des perçage permettant l'accès à l'eau de nettoyage afin de faire pénétrer dans le dispositif de mélange 51 l'eau pour le nettoyage dudit dispositif (on parle alors d'une vanne 56 en position de lavage), et l'autre perçage permettant l'accès à l'aiguille creuse, soit pour faire pénétrer un composant, de préférence un composant d'actifs dans ledit dispositif de mélange, soit pour faire sortir l'eau de nettoyage par l'aiguille creuse et ainsi la nettoyer (on parle alors d'une vanne 56 en position ouverte).

De manière préférée, la vanne 56' possède 2 perçages, coulissant dans un conduit ménagé dans le dispositif de mélange, l'un des perçage permettant l'accès au composant, de préférence le composant de base, et l'autre perçage permettant l'accès à la buse de fourniture du produit ainsi obtenu par mélange.

### Dispositif de sélection (10) d'au moins un composant dans sa capsule (103)

De manière avantageuse, le dispositif de sélection (10)
- est en rotation autour d'un axe (7),
- est de préférence circulaire ou hemi-circulaire,
- comprend au moins un, deux, trois, quatre, cinq, ou au moins six emplacement(s) (Y) pouvant accueillir chacun une capsule (103),
- comprend un trappe de sécurité (Z) avec un orifice (1) permettant l'insertion de capsule (103) dans le dispositif de sélection (10) quand l'orifice (1) est en face d'un emplacement (Y) puis, après rotation, empêchant l'insertion de capsule (103) dans le dispositif de sélection (10) quand l'orifice (1) n'est pas en face d'un emplacement (Y).

De manière préférée selon la présente invention, le dispositif de mélange (51) comprend un dispositif de prélèvement (90) des composants cosmétiques, dans la capsule (103), et un dispositif de transfert des composants vers le dispositif de mélange (51).

De manière avantageuse, le dispositif de prélèvement et le dispositif de transfert peuvent être un seul et même dispositif.

De manière particulièrement préférée, ledit dispositif de prélèvement (90) comprend une aiguille creuse et un moyen d'aspiration du composant cosmétique, à travers ladite aiguille creuse.

De manière avantageuse, ladite aiguille creuse est incorporée au dispositif de mélange (51) et le moyen d'aspiration est le piston (50) du dispositif de mélange, permettant de transférer directement le composant cosmétique, de la capsule (103) au dispositif de mélange (51) en passant par l'aiguille creuse, qui sert alors de dispositif de prélèvement et de dispositif de transfert

De manière particulièrement préférée, ledit dispositif de mélange (51) pourra comprendre une vanne principale apte, dans une de ses positions, à mettre en communication ladite aiguille creuse (90) avec ledit dispositif de mélange (51), et dans une de ses positions à obstruer l'orifice du dispositif de mélange (51) pendant la phase de mélange.

Par moyen d'aspiration, on entend désigner selon la présente invention un dispositif permettant de faire varier le volume disponible dans le réceptacle du dispositif de mélange (51) de manière à aspirer le contenu de la capsule (103) et le distribuer dans le dispositif de mélange, tel qu'un piston entraîné par un moteur, de préférence le piston (50) du dispositif de mélange (51).

Par aiguille creuse on entend désigner selon la présente invention une aiguille creuse apte à percer la capsule (103).

De manière avantageuse selon la présente invention, le dispositif de mélange (51) est placé sur un chariot (88) pouvant se déplacer, de préférence coulisser, sur des rails (5) dans un mouvement de translation horizontale d'avant en arrière par rapport au dispositif de sélection (10). De manière préférée, le chariot (88) est relié à un moteur pour pouvoir se déplacer.

De manière avantageuse, le dispositif pour la fabrication d'un produit cosmétique, personnalisé selon la présente invention comprend en outre un contenant (P) pour recueillir les capsules (103) après utilisation. De manière préférée, ce contenant (P) est amovible dudit dispositif afin de pouvoir vider facilement son contenu, à savoir les capsules utilisées, par exemple avec les déchets.

De manière avantageuse, le dispositif de mélange (51) comprend un orifice d'entrée (X') pour le composant dans ledit dispositif de mélange (51), ledit orifice (X') pouvant être mis en contact de manière étanche avec au moins un pot (11).

### Dispositif de sélection et de dosage (44) d'au moins un composant contenu dans un pot (11).

De manière préférée, le dispositif selon la présente invention est caractérisé en ce que
- le dispositif de sélection et de dosage (44) comprend un dispositif (111) de support de pot (11) se présentant sous la forme d'un contenant, de préférence cylindrique, pouvant accueillir au moins un, deux, trois, quatre, cinq ou au moins six pots (11), de préférence 3 pots (11), ledit dispositif (111) de support de pot (11) comprenant une fente (F) pour chaque pot (11), située sur le côté du contenant (111) et permettant d'enclencher une butée escamotable (B);
- le dispositif de sélection et de dosage (44) comprend un dispositif d'impulsion (45) placé en contact et sous le dispositif de support de pot (111) et se présentant de préférence comme une roue circulaire présentant une pente (16) pour chaque pot (11) qu'accueille le support de pot (111) ;
- le dispositif de sélection et de dosage (44) comprend une butée escamotable (B) placée en face du contenant (111) pouvant soit être escamotée dans le dispositif (44), soit s'enclencher dans la fente (F) correspondant au pot (11) choisi, permettant au support de pot (111), quand ladite butée est enclenchée dans la fente (F) du pot (11) choisi, de suivre la pente (16), et ainsi de mettre en contact le pot (11) choisi avec le dispositif de mélange (51) et amener au dispositif de mélange (51) une dose du composant contenu dans le pot (11) choisi ;
- le dispositif (111) de support de pot (11) et le dispositif d'impulsion (45) sont positionnés l'un sur l'autre et en rotation ensemble autour d'un axe (8).

De manière avantageuse, le dispositif (111) de support de pot et le dispositif d'impulsion (45) peuvent être mis en rotation dans un sens et dans l'autre à l'aide d'un moteur.

L'embout pompe (78) sur le pot (11) est l'orifice de sortie du composant dans le pot (11) et permet, lorsqu'il est enclenché dans l'orifice (X') du mélangeur (51) de délivrer une dose de composant contenu dans ledit pot (11). Selon un mode de réalisation, la dose de composant est délivré après l'enclenchement dans l'orifice (X') par pression du pot (11) et donc de l'embout pompe (78) dans ledit orifice (X'), appelé impulsion.

Le volume de produit cosmétique, personnalisé obtenu par l'invention peut être pour une dose pour une utilisation, par exemple immédiate par l'utilisateur, ou plusieurs doses, pour plusieurs utilisations, dans ce cas le produit pourra être stocké dans un récipient par le consommateur.

Dans le cas où le volume de produit cosmétique est d'une dose, il s'agira typiquement d'un volume de l'ordre du ml, et dans le cas particulier d'un produit cosmétique pour le visage, d'un volume d'environ 1 ml. Dans ce cas de figure d'un volume de produit cosmétique de 1ml, la dose de composant, c'est à dire le volume de composant, délivré par le dispositif pour chaque impulsion par le dispositif d'impulsion (45) peut être de l'ordre de 0,2ml, et il sera avantageux de réaliser au moins 2 à 5, avantageusement 2 à 3 impulsions.

De manière avantageuse, le dispositif la présente invention est caractérisé en ce que le composant contenu dans le pot (11) choisi est amené au dispositif de mélange (51) par impulsion, de préférence par pression de l'embout pompe (78) du pot (11) avec l'entrée (X') du dispositif de mélange (51).

De manière préférée le dispositif selon la présente invention, comprend au moins un autre contenant susceptible d'amener un autre composant au dispositif de mélange (51), de préférence une capsule (103). Ladite capsule (103) contient de préférence un composant actif.

Le produit personnalisé est un produit cosmétique et les composants sont des composants cosmétiques, de préférence le ou les composant(s) cosmétique(s) contenu(s) dans le ou les pot(s) (11) sont des composants de base, et le ou les composant(s) contenu(s) dans la ou les capsule(s) (103) sont des composants actifs.

### Interface

Dans un mode de réalisation particulier, le dispositif selon l'invention comprend une interface, pouvant être reliée à un dispositif de traitement des données et à un moyen de contrôle, laquelle interface permet à l'utilisateur de sélectionner au moins un composant du produit cosmétique personnalisé, de préférence au moins un composant actif, de préférence tous les composants actifs, de manière encore préférée tous les composants contenus dans le produit personnalisé.

Par interface de collecte de données (In) on entend désigner selon la présente invention une interface, de préférence une interface informatique, qui permet à un utilisateur ou à un tiers de la part de l'utilisateur, de renseigner ses données personnalisées qui seront enregistrées et/ou transférées, par exemple à partir d'une base de données, à un dispositif de traitement des données.

L'interface (In) selon la présente invention peut être composée par exemple d'un écran tactile, d'un affichage, d'un moniteur, d'un clavier d'un écran de visualisation, d'un lecteur de codes barres, d'un crayon lumineux, d'un système de reconnaissance vocale, d'un clavier, d'une souris ou similaire ou d'autres équipements périphériques.

De manière avantageuse selon l'invention, l'interface (In) peut être connectée à un réseau informatique, pouvant prendre par exemple la forme d'un serveur informatique (Sv), physiquement connecté à l'interface ou connecté via Internet (Cl) (également appelé serveur dématérialisé ou serveur dans le Cloud), permettant notamment une mise à jour régulière de l'interface et en particulier de la base de données, et/ou de transmettre les instructions de fabrication d'un produit personnalisé à distance par exemple à un dispositif de fabrication de produit personnalisé (Ma).

Par dispositif de traitement des données on entend désigner selon la présente invention un système de traitement automatisé des données de préférence collectées par l'interface selon la présente invention. Ce dispositif de traitement des données peut comprendre en particulier une ou plusieurs unités de traitement, de la mémoire, un logiciel, une ou plusieurs base de données selon l'invention. De préférence le logiciel permet d'appliquer l'algorithme de la méthode selon la présente invention.

Le dispositif de traitement des données peut comprendre de préférence un ordinateur. Par ordinateur on entend également tout dispositif électronique capable d'effectuer le traitement automatisé des données collectées par l'interface selon la présente invention.

De manière avantageuse selon l'invention, le dispositif de traitement des données peut être connectée à un réseau informatique, à un serveur, en particulier un serveur virtuel (dit serveur dans le Cloud) ou à Internet, permettant notamment une mise à jour régulière par exemple du logiciel, et/ou de transmettre les instructions de fabrication d'un produit personnalisé a distance.

De manière avantageuse selon l'invention, l'interface de collecte des données et le dispositif de traitement des données peuvent être comprise dans le même dispositif (par exemple une tablette tactile, un téléphone mobile ou un ordinateur).

De manière avantageuse, le dispositif de fabrication d'un produit personnalisé selon la présente invention peut comprendre un même dispositif associant une interface et un dispositif de traitement des données (dit alors back-end), et/ou un deuxième dispositif de traitement des données sur un serveur dans le Cloud, le choix du dispositif de traitement des données avec lequel l'interface doit interagir parmi les deux dispositifs « back-end » ou « serveur dans le Cloud » se faisant en fonction du nombre de données à analyser, en particulier en fonction du nombre d'informations renseignées par l'utilisateur.

Avantageusement, le dispositif de traitement des données comprend un algorithme pour traiter les données entrées par l'utilisateur dans l'interface (tel que par exemple choix du composant de base), ou du choix du composant actif en fonction de la capsule (103) insérée dans le dispositif, par reconnaissance de son code d'identification, afin de définir automatiquement les composants adaptés pour la fabrication du produit personnalisé et calculer les quantités de chaque composant en fonction desdites données. Le dispositif comprend de préférence au moins un ordinateur.

De manière avantageuse, lesdites informations ou données peuvent être obtenues directement par l'utilisateur, par exemple par le biais d'un questionnaire, ou automatiquement en recueillant les informations d'un ou plusieurs objet connecté utilisé par ledit utilisateur, tel un téléphone mobile ou d'une montre connectée à internet, permettant par exemple de récupérer les données de l'activité physique effectuée par l'utilisateur dans la journée, ou encore la température, le taux d'hygrométrie, ou encore le taux de pollution du lieu ou se trouve l'utilisateur suite à sa geolocalisation.

Avantageusement, l'interface comprend des boutons disposés sur le dispositif de fabrication (Ma), de préférence 3 boutons rétro éclairés, permettant de sélectionner le composant choisi. Dans le cadre d'un produit cosmétique, il peut par exemple s'agir de sélectionner le composant de base choisi, tel qu'une base sérum, une base émulsion huile dans eau, ou une émulsion eau dans huile.

Avantageusement, ladite interface, de préférence sur téléphone mobile, tablette tactile ou ordinateur, est également capable d'afficher les niveaux des composants cosmétiques, notamment des composants de base, par exemple en comptabilisant le nombre d'impulsion réalisé sur chaque contenant (11) et donc le nombre de doses déjà délivré par le contenant (11).

### Code d'identification et moyens de détection (12)

Le ou les code(s) d'identification utilisé(s) dans le cadre de la présente invention peuvent être tout code d'identification connu des connaissances générales de l'homme du métier tel que des codes couleurs, puces RFID, codes barre, QR code. Les moyens de détection du ou desdits code d'identification sont adapté au code d'identification choisi. De préférence, le code d'identification selon la présente invention est un code couleur et le moyen de détection est un moyen optique.

### Méthode

Un deuxième objet de la présente invention concerne une méthode de fabrication d'un produit cosmétique personnalisé pour un utilisateur, selon la revendication 6.

De manière avantageuse selon la présente invention, le ou les composant(s) actif(s) de la formule du produit personnalisé et leur quantité est (sont) définie(s) par un nombre de capsules (103) et type de capsule (103) selon le composant qu'elles contiennent, à insérer dans le dispositif de sélection (10).

De manière avantageuse selon la présente invention, la dose de composant(s) de base de la formule du produit personnalisé est définie par le nombre d'impulsion délivrée par le dispositif de sélection et de dosage (44) sur l'embout pompe (78) du pot (11).

De manière avantageuse selon la présente invention, l'étape c) de fourniture de formule personnalisée de produit pour ledit utilisateur consiste à indiquer à l'utilisateur quelle(s) capsule(s) (103) de composant actif amener au dispositif de mélange (51) à l'étape e), ladite capsule ayant un code d'identification, de préférence un code d'identification couleur, qui quand il sera détecté par un moyen de détection (12) communiquera automatiquement au dispositif de sélection et de dosage (44) quel composant de base prélever dans le pot (11) correspondant, à l'étape e), et dans quelle quantité.

De manière avantageuse selon la présente invention, l'étape e)de la méthode selon la présente invention comprend les étapes suivantes :
I) amener au dispositif de mélange (51) au moins un composant contenu dans un pot, (11) par les étapes suivantes :
   a) Amener par rotation des dispositifs (111) et (45) autour de l'axe 8 le pot (11) placé sur le dispositif (111) de support de pot de manière à ce que le pot (11) choisi soit en face de l'orifice d'entrée (X') du dispositif de mélange (51)
   b) Faire tourner les dispositifs (111) et (45) par rotation autour de l'axe (8) dans le sens opposé de l'étape a) de manière à ce que la fente (F) correspondant au pot (11) choisi s'enclenche dans la butée escamotable (B) permettant au support de pot (111), quand ladite butée est enclenchée dans la fente (F) du pot (11) choisi, de suivre la pente (16) du pot (11) choisi, et ainsi de mettre en contact le pot (11) choisi avec le dispositif de mélange (51) et amener au dispositif de mélange (51), de préférence dans le réceptacle (53), une dose du composant contenu dans le pot (11) choisi par pression de l'embout pompe (78) du pot (11) avec l'orifice (X') du dispositif de mélange (51) ;
   c) Optionnellement répéter les étapes a) et b) pour autant de fois que l'on veut amener de dose du composant contenu dans le pot (11) choisi ;
   d) faire passer par le mouvement du dispositif permettant de faire varier alternativement le volume disponible des réceptacles 52 et 53, de préférence par le mouvement des pistons 50 ledit composant cosmétique de base du réceptacle 53 au réceptacle 52 par le conduit 55 reliant les deux orifices 110 ;
   e) effectuer un dégazage du réceptacle 52 par un mouvement du dispositif permettant de faire varier alternativement le volume disponible des réceptacles 52 et 53, de préférence par un mouvement du piston 50 de manière à sortir de l'air présent dans le réceptacle 52 par l'orifice X ;
II) amener au dispositif de mélange (51), de préférence dans le réceptacle 52 grâce à l'orifice (X), au moins un composant contenu dans une capsule (103) par les étapes suivantes :
   f) A positionner l'orifice (1) de la trappe de sécurité (Z) en face d'un emplacement (Y) du dispositif de sélection (10),
   g) A insérer une capsule (103) contenant un composant à travers l'orifice (1) jusqu'à l'emplacement (Y) situé en face dudit orifice (1),
   h) A positionner par rotation du dispositif de sélection (10) la capsule (103) insérée, en face du dispositif de mélange (51), de préférence en face du dispositif de prélèvement (90),
   i) A déplacer le dispositif de mélange (51) sur le chariot (88) par translation horizontale en avant jusqu'à la capsule (103) qui est dans l'emplacement (Y) du dispositif de sélection 10,
   j) A transférer le composant de la capsule (103) au dispositif de mélange (51), de préférence au réceptacle (52) grâce à l'orifice (X)
   k) A déplacer le dispositif de mélange 51 sur le chariot (88) par translation horizontale arrière, afin qu'il ne soit plus en contact avec la capsule (103) ;
   l) Optionnellement répéter les étapes e) à j) pour amener au dispositif de mélange (51), de préférence dans le réceptacle 52 grâce à l'orifice (X), un autre composant contenu dans une autre capsule (103) ;

L'étape I pouvant être réalisée avant l'étape II, ou inversement.

De manière avantageuse selon la présente invention, l'étape f) de la méthode selon la présente invention comprend les étapes suivantes :
III) A effectuer le mélange desdits au moins deux composants dans ledit dispositif de mélange (51) par les étapes suivantes :
a) réaliser un mélange homogène des composants cosmétiques en actionnant le moteur 62 de façon à faire passer alternativement, par le mouvement du dispositif permettant de faire varier alternativement le volume disponible des réceptacles 52 et 53, de préférence par le mouvement opposé des pistons 50, les composants des réceptacles 52 et 53 par le conduit 55 reliant les deux orifices 110, en finissant avec ledit mélange des composants cosmétiques dans le réceptacle 53 ;
b) distribuer le produit cosmétique ainsi fabriqué à l'utilisateur par un mouvement du dispositif permettant de faire varier alternativement le volume disponible des réceptacles 52 et 53, de préférence par un mouvement du piston 50 de manière à sortir ledit produit cosmétique par l'orifice X' jusqu'à l'utilisateur ;
c) optionnellement laver le dispositif de mélange par une étape de nettoyage,
le au moins un pot (11) et/ou la au moins une capsule (103) présentant un code d'identification, de préférence un code couleur, et le nombre de dose du composant contenu dans ledit pot (11) amené à l'étape I et/ou le type et/ou le nombre de capsules (103) pouvant être amené à l'étape II étant fonction du ou des code(s) d'identification détecté(s).

De manière avantageuse, les étapes I et/ou II du procédé selon la présente invention sont répétées autant de fois que l'on veut ajouter de composant pour la fabrication du produit personnalisé, avant de réaliser l'étape III.

Dans un mode de mise en oeuvre particulier, le procédé selon l'invention comprend en outre les étapes consistant à :
- sélectionner, au préalable, sur le dispositif selon la présente invention, le produit cosmétique, souhaité puis seulement à amener audit dispositif de mélange (51) lesdits au moins deux composants cosmétiques, présentant les codes d'identification sélectionnés par ledit dispositif.

Dans un mode de mise en oeuvre particulier, ledit code d'identification est un code couleur et la détection est effectuée par des moyens optiques. Lesdits au moins deux composants cosmétiques comprennent :
- au moins un composants de base, et
- au moins un, deux, trois, quatre, cinq voir au moins six composants actifs,
- où si au moins un des composants actifs est susceptible d'être incompatible avec au moins un des composants de base, ledit procédé comprenant l'étape consistant à verrouiller l'opération de mélange si les codes d'identification d'au moins un composant de base et d'au moins un composant actif et/ou d'au moins 2 composants actifs sont incompatibles.

Le volume de produit cosmétique personnalisé obtenu par l'invention peut être pour une dose pour une utilisation, par exemple immédiate par l'utilisateur, ou plusieurs doses, pour plusieurs utilisations, dans ce cas le produit pourra être stocké dans un récipient par le consommateur. Dans le cas où le volume de produit cosmétique est d'une dose, il s'agira typiquement d'un volume de l'ordre du ml, et dans le cas particulier d'un produit cosmétique pour le visage d'un volume d'environ 1 ml. Dans ce cas de figure d'un volume de produit cosmétique de 1ml, le volume du conduit 55 dans la vanne 57 peut être de l'ordre de 0,05ml, et il sera avantageux de réaliser au moins 3, avantageusement 3 à 6, allers retours des composants cosmétiques entre les réceptacles 52 et 53 (en actionnant le moteur 62 de façon à faire passer alternativement, par le mouvement du dispositif permettant de faire varier alternativement le volume disponible des réceptacles 52 et 53, de préférence par le mouvement opposé des pistons 50, les composants des réceptacles 52 et 53 par le conduit 55 reliant les deux orifices 110) afin de permettre de réaliser un mélange homogène des composants cosmétiques.

De manière avantageuse, le procédé pour la fabrication par mélange d'au moins deux composants cosmétiques, et la distribution d'un produit cosmétique, personnalisé, comprend les étapes consistant à:
- Mettre la vanne 56' en position ouverte à l'aide du moteur 62 de manière à amener à un dispositif de mélange (51) au moins un composant, de préférence cosmétique de base, dans le réceptacle 53 grâce à l'orifice X'; mettre la vanne 56' en position fermée à l'aide du moteur 62 permettant de fermer l'orifice X';
- mettre la vanne 57 en position ouverte à l'aide du moteur 62, permettant d'ouvrir les deux orifices 110 ;
- Actionner le moteur 62 de façon à faire passer par le mouvement du dispositif permettant de faire varier alternativement le volume disponible des réceptacles 52 et 53, de préférence par le mouvement des pistons 50 ledit composant, de préférence cosmétique de base, du réceptacle 53 au réceptacle 52 par le conduit 55 reliant les deux orifices 110 ;
- mettre la vanne 57 en position fermée à l'aide du moteur 62, permettant de fermer les deux orifices 110 ;
- mettre la vanne 56 en position ouverte à l'aide du moteur 62 de manière à ouvrir l'orifice X et effectuer un dégazage du réceptacle 52 par un mouvement du dispositif permettant de faire varier alternativement le volume disponible des réceptacles 52 et 53, de préférence par un mouvement du piston 50 de manière à sortir de l'air présent dans le réceptacle 52 par l'orifice X ;
- amener audit dispositif de mélange 51 au moins un composant, de préférence cosmétique actif, dans le réceptacle 52 grâce à l'orifice X avec la vanne 56 en position ouverte à l'aide du moteur 62;
- amener les vannes 56 et 56' en position fermée à l'aide du moteur 62 de manière à fermer les orifices X et X' ;
- amener la vanne 57 en position ouverte à l'aide du moteur 62 de manière à ouvrir les orifices 110 et le conduit 55
- réaliser un mélange homogène des composants cosmétiques, en actionnant le moteur 62 de façon à faire passer alternativement, par le mouvement du dispositif permettant de faire varier alternativement le volume disponible des réceptacles 52 et 53, de préférence par le mouvement opposé des pistons 50, les composants des réceptacles 52 et 53 par le conduit 55 reliant les deux orifices 110, en finissant avec ledit mélange des composants cosmétiques, dans le réceptacle 53 ;
- amener la vanne 57 en position fermée et amener la vannes 56' en position ouverte à l'aide du moteur 62 de manière à ouvrir l'orifice X';
- distribuer le produit cosmétique, ainsi fabriqué à l'utilisateur par un mouvement du dispositif permettant de faire varier alternativement le volume disponible des réceptacles 52 et 53, de préférence par le mouvement du piston 50 de manière à sortir ledit produit cosmétique, par l'orifice X' jusqu'à l'utilisateur ;
- optionnellement laver le dispositif de mélange par une étape de nettoyage.

De manière avantageuse, l'étape de nettoyage du procédé comprend la ou les étapes suivantes :
- une première étape de lavage des réceptacles 52 et 53, des orifices X et X', de l'intérieur des vannes 56 et 56' et du conduit 55 de préférence compris dans la vanne 57 comprenant les étapes suivantes :
   ∘ mettre la vanne 56 en position lavage à l'aide du moteur 62, permettant à l'orifice X d'être en face du réservoir d'eau de lavage ;
   ∘ aspirer de l'eau située dans le réservoir d'eau de lavage à travers l'orifice X jusqu'au réceptacle 52 ;
   ∘ mettre la vanne 56 en position fermée, mettre la vanne auxiliaire 57 en position ouverte à l'aide du moteur 62,
   ∘ actionner le moteur de façon à faire passer alternativement, l'eau par le mouvement du dispositif permettant de faire varier alternativement le volume disponible des réceptacles 52 et 53, de préférence par le mouvement opposé des pistons 50, des réceptacles 52 à 53 par le conduit 55, de préférence compris dans la vanne 57 reliant les deux orifices 110, puis finir avec l'eau de nettoyage dans le réceptacle 53,
   ∘ mettre la vanne 57 en position fermée pour fermer les orifices 110
   ∘ mettre la vanne 56' en position ouverte
   ∘ évacuer l'eau issue du lavage par l'orifice X' vers un bac de récupération ;
- une deuxième étape de lavage du réceptacle 52, de l'orifice X et l'intérieur et l'extérieur de l'aiguille creuse 90 comprenant les étapes suivantes :
   ∘ mettre la vanne 57 en position fermée pour fermer les orifices 110 ;
   ∘ mettre la vanne 56 en position lavage à l'aide du moteur 62, permettant à l'orifice X d'être relié au réservoir d'eau de lavage ;
   ∘ aspirer de l'eau située dans le réservoir d'eau de lavage à travers l'orifice X jusqu'au réceptacle 52 ;
   ∘ mettre la vanne 56 en position ouverte permettant que l'orifice X soit relié à l'aiguille creuse 90 ;
   ∘ insérer l'aiguille creuse 90 dans le dispositif Y creux de forme circulaire reliant l'orifice d'entrée X à un bac de récupération de l'eau
   ∘ évacuer l'eau par l'orifice X et l'aiguille creuse 90 à travers le dispositif Y creux permettant de nettoyer l'orifice X puis l'intérieur de l'aiguille creuse 90, puis l'extérieur de l'aiguille creuse 90, l'eau revenant dans le dispositif Y sur l'extérieur de l'aiguille creuse 90 avant d'être évacuée vers un bac de récupération de l'eau issue du lavage

### Légende des Figures :

La figure 1 est une vue de face avant du dispositif de mélange 51 sans les pistons.
La figure 2 est une vue de face arrière du dispositif de mélange 51.

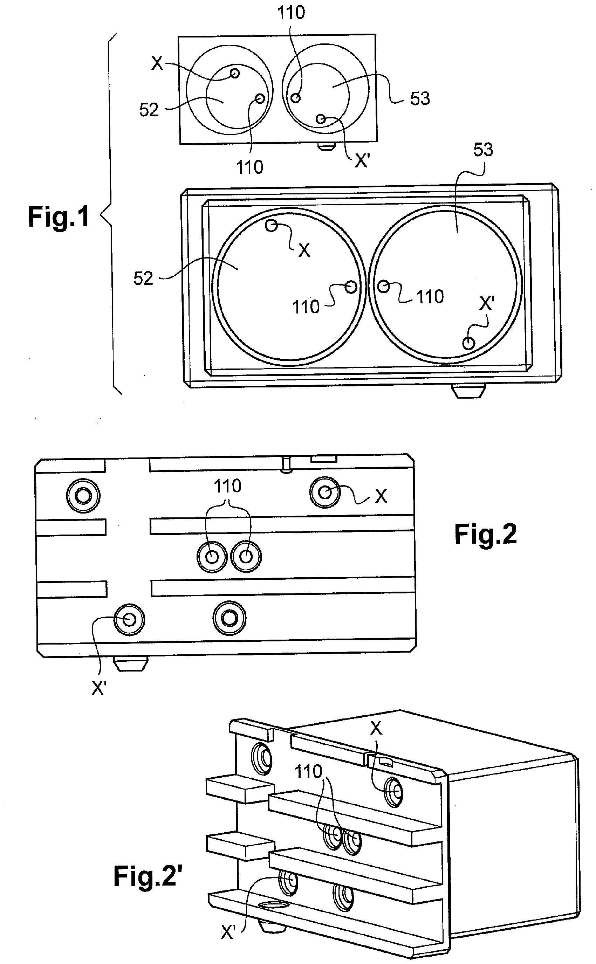

La figure 2' est une vue de face arrière 3/4 du dispositif de mélange 51.

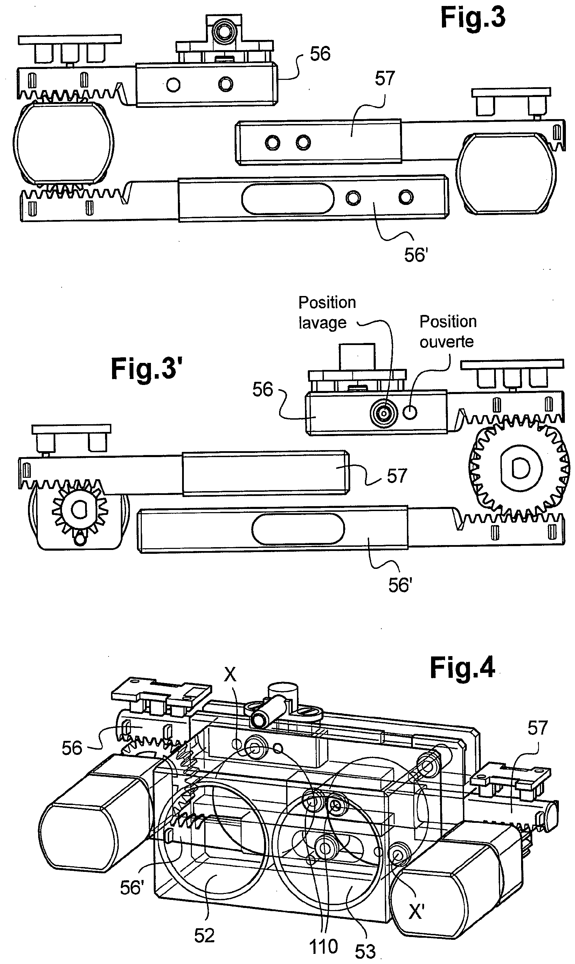

Les figure 3 et 3' représentent les vannes principale 56 et 56' et une vanne auxiliaire 57 , de face avant (figure 3) et de face arrière (figure 3'). On distingue sur la figure 3, vanne 56, les positions ouvertes permettant l'accès du composant cosmétique dans le réceptacle 52, et la position de lavage permettant l'accès à l'eau de nettoyage
La figure 4 représente, en perspective, l'ensemble du dispositif de mélange en face avant, les pistons et les réceptacles 52 et 53 étant représentés en transparence.

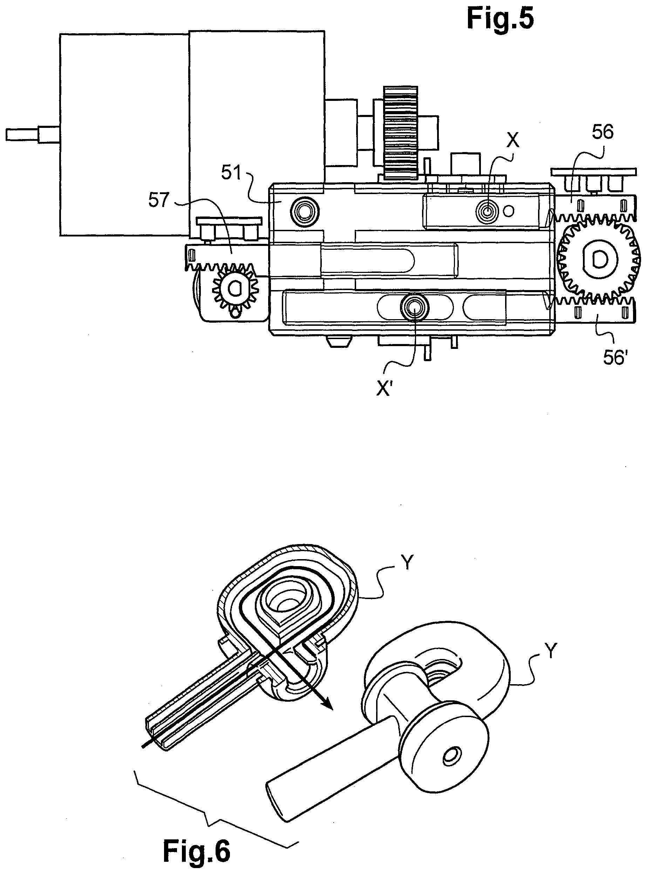

La figure 5 représente, en perspective, l'ensemble du dispositif de mélange en face arrière.
La figure 6 représente le dispositif creux circulaire pour le nettoyage (présenté en coupe horizontale en haut de la photo, présenté fermé tel qu'utilisé dans le dispositif selon l'invention en bas de la photo). On peut voir sur la gauche l'embout permettant d'insérer l'aiguille creuse 90 et avec la flèche blanche le trajet de l'eau à l'intérieur du dispositif Y permettant de nettoyer l'intérieur de l'aiguille creuse 90, puis en repassant après le coude, l'extérieur de l'aiguille creuse 90 (à l'endroit où la flèche blanche se croise)

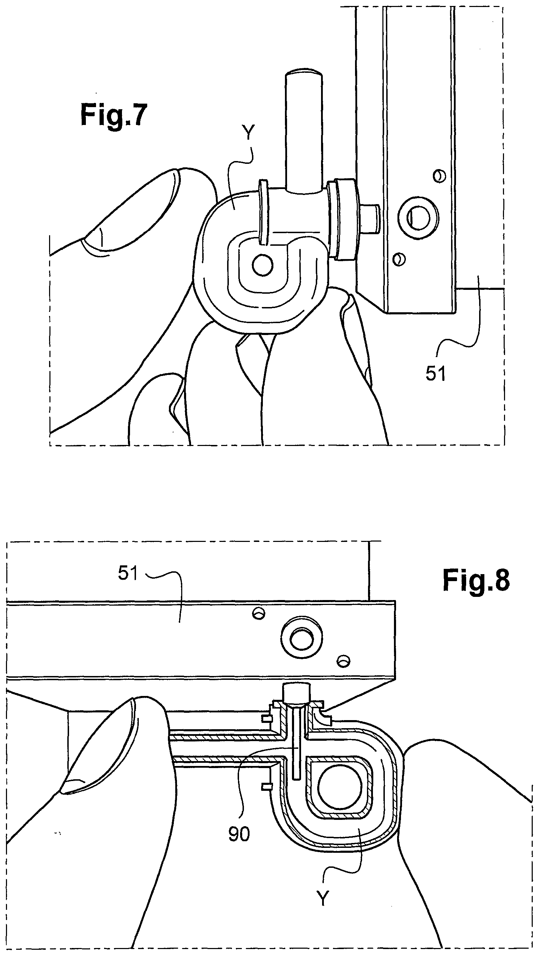

La figure 7 représente le dispositif creux circulaire pour le nettoyage avec l'aiguille creuse insérée à l'intérieur, en position de nettoyage (Y présenté fermé tel qu'utilisé dans le dispositif selon l'invention en bas de la photo).
La figure 8 représente le dispositif creux circulaire pour le nettoyage avec l'aiguille creuse insérée à l'intérieur, en position de nettoyage (présenté en coupe horizontale. On distingue l'aiguille creuse 90 à l'intérieur du dispositif Y).

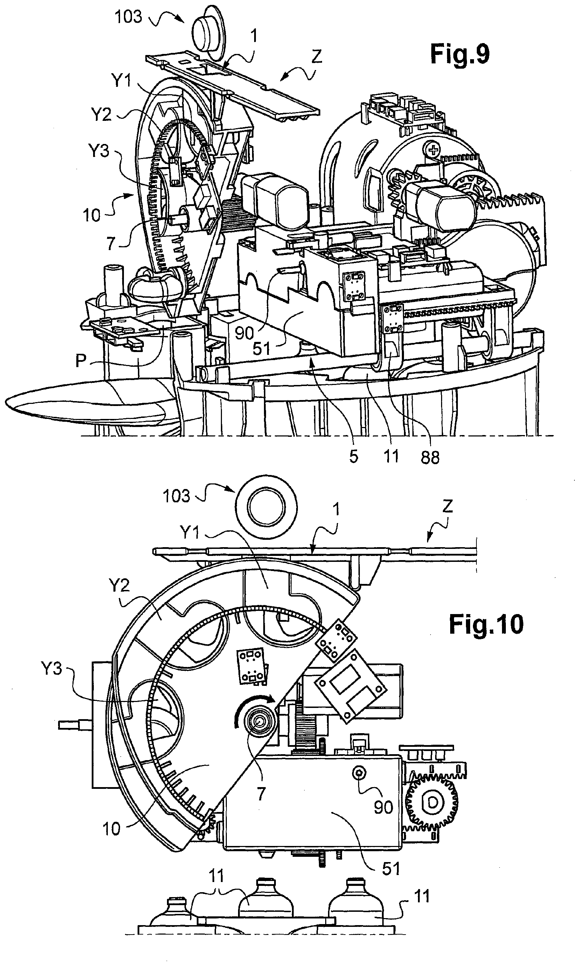

La figure 9 est une vue en perspective du dispositif de fabrication avec un capot représenté transparent afin de pouvoir visualiser les organes internes du dispositif.
La figure 10 est une vue en coupe verticale du dispositif de fabrication.

Ces figures montrent un orifice (1) en forme de capsule pour l'introduction d'une, deux ou trois capsules (103) de composant actif, dans un des 3 emplacements Y (Y1, Y2 et Y3) du dispositif de sélection (10) (sur les figures, la capsule (103) va se placer dans l'emplacement Y1, le plus haut, situé en face de l'orifice (1)). Ces capsules contiennent chacune un composant actif qui sera prélevé par l'aiguille creuse (90) puis sera mélangé à l'aide du dispositif de mélange (51) avec un ou plusieurs composants de base contenu dans des contenants (11) installés dans le dispositif par l'utilisateur.

Sur la figure 9, on peut voir le chariot (88) sur lequel est placé le mélangeur (51) qui se déplace horizontalement vers l'avant (sur la figure 9 cela se traduit par un déplacement vers la gauche vers le dispositif de sélection (10)) sur des rails (5), puis vers l'arrière pour retrouver sa position initiale telle que représentée sur la figure 9.

On décrira maintenant le séquencement de fonctionnement du dispositif, plus particulièrement en référence aux figures 9 et 10.

La première phase du processus consiste à introduire une capsule de composant actif dans l'orifice 1 jusqu'à l'emplacement (Y1).
- Dans une première étape, le dispositif de sélection (10) va se déplacer par rotation autour de l'axe (7) dans le sens des aiguilles d'une montre de manière à positionner l'emplacement (Y1) maintenant chargé d'une capsule (103) en face de l'aiguille creuse (90) du dispositif de mélange (51); sur la figure 2 on constate qu'une rotation d'environ 90 degrés dans le sens des aiguilles d'une montre permet d'obtenir un tel résultat.
- Dans une deuxième étape, le chariot (88) sur lequel est placé le mélangeur (51) se déplace grâce au moteur horizontalement vers l'avant (sur la figure 1 cela se traduit par un déplacement vers la gauche vers le dispositif de sélection (10)) sur les rails (5) jusqu'à ce que l'aiguille creuse (90) perce la capsule (103) dans l'emplacement (Y1) et aspire par le moyen d'aspiration (piston) le composant actif présent dans la capsule et le transfère dans le dispositif de mélange (51).
- Dans une troisième étape, le chariot (88) sur lequel est placé le mélangeur (51) se déplace grâce au moteur horizontalement vers l'arrière (sur la figure 9 cela se traduit par un déplacement vers la droite vers le dispositif de sélection (10)) sur les rails (5) jusqu'à ce que le chariot et le mélangeur ai repris sa place d'origine, telle que représentée sur la figure 9.

Optionnellement l'utilisateur peut ajouter un nouveau composant cosmétique, de préférence un composant actif en insérant une nouvelle capsule (103) dans le dispositif de sélection (10) à travers l'orifice (1) placé en face de l'emplacement (Y2) grâce à la rotation dudit dispositif de sélection. L'utilisateur peut alors réitérer la première phase du processus avec une deuxième capsule de composant actif, l'emplacement Y2 remplaçant l'emplacement Y1.

De même optionnellement, une troisième capsule peut être ajoutée dans l'emplacement Y3 par rotation du dispositif de sélection (10) jusqu'à ce qu'il se trouve en face de l'orifice (1).

La ou les capsules ainsi utilisées sont ensuite évacuées vers un compartiment à déchet par rotation du dispositif de sélection (10) jusqu'à ce que l'emplacement (Y) dans lequel se trouve une capsule usagée se trouve dans une position où la capsule tombe par gravité (sur la figure 10 cette position sera obtenue par exemple par une rotation de 225 degrés dans le sens des aiguilles d'une montre), où elle sera récupérée dans un contenant à déchet. De manière avantageuse, une fois le contenu des capsules (103) transféré dans le mélangeur (51), le dispositif de sélection revient à sa position de départ, tel que présenté sur les figures 9 et 10, à savoir avec l'emplacement (Y1) en face de l'orifice (1), par rotation, par exemple dans le sens des aiguille d'une montre, ce qui positionnera automatiquement les emplacements (Y1), puis (Y2) puis (Y3) dans une position où la capsule tombe par gravité dans le contenant à déchet.

Dans une deuxième phase du processus, le contenant (11) de composant de base délivre une dose de composant de base dans le mélangeur (51) à l'aide d'un moyen de prélèvement et de transfert.

La troisième phase du processus consiste à mélanger les composants de base et les composants actifs dans le dispositif de mélange (51).

La quatrième phase du processus consiste à distribuer le produit ainsi fabriqué à l'utilisateur.

En fin de cycle, un nettoyage du dispositif est effectué par un liquide de nettoyage pouvant être de l'eau. Le liquide de nettoyage est ensuite recueilli dans le contenant à déchets.

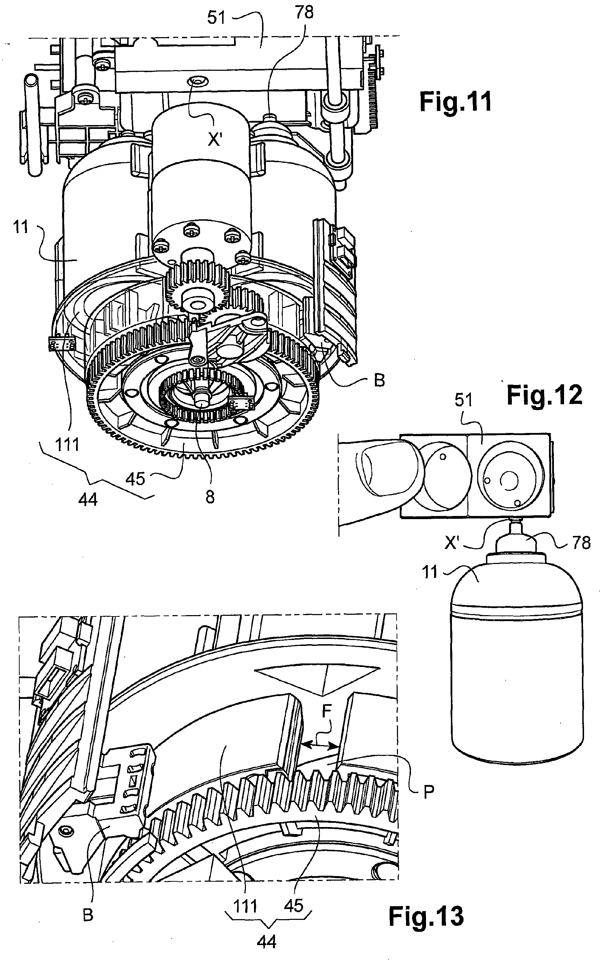

La figure 11 est une vue en perspective du dessous ¾ du dispositif de fabrication avec un capot représenté transparent afin de pouvoir visualiser les organes internes du dispositif.

La figure 12 est une vue du devant du dispositif de mélange (51) dans lequel l'embout pompe d'un pot (11) est enclenché dans l'orifice (X').

La figure 13 est une vue en détail de la butée escamotable (B), du dispositif d'impulsion (45) placé sous le dispositif (111) de support de pot et d'une fente (F) sur ledit dispositif (111). Constate qu'en mettant en rotation dans le sens horaire autour de l'axe (donc vers la droite) les dispositifs (45) et (111), alors la butée escamotable (B) est escamotée et le dispositif (111) peut tourner librement. A l'inverse, on constate qu'en mettant en rotation dans le sens anti-horaire autour de l'axe (donc vers la gauche) les dispositifs (45) et (111), alors la butée escamotable (B) s'enclenchera dans la fente (F) et le dispositif (111) suivra alors la pente (16) et mettra le pot (11) en contact avec le dispositif de mélange (51).

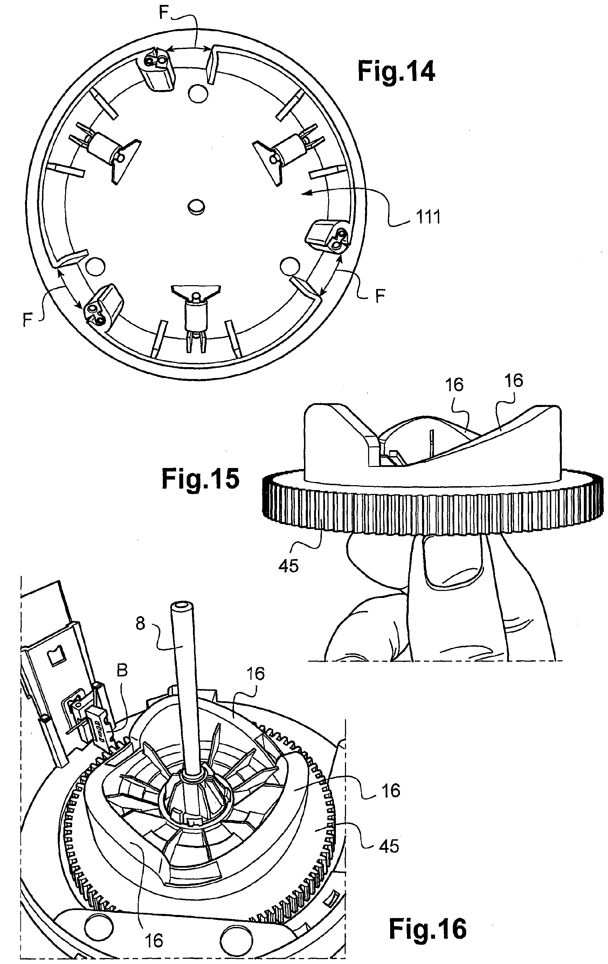

La figure 14 est une vue du dessous du dispositif (111) de support de pot (11) pouvant contenir 3 pots (11). On distingue 3 fentes (F) correspondant aux 3 pots (11) où pourra venir s'enclencher la butée escamotable (B).

La figure 15 est une vue du côté du dispositif d'impulsion (45) avec 3 pentes (16). Comme on peut le voir, le dispositif d'impulsion (45) est denté afin d'être entraîné plus facilement par un moteur pour entrer en rotation autour de l'axe (8).

La figure 16 est une vue du dessus du dispositif d'impulsion (45) avec 3 pentes (16). Comme on peut le voir, le dispositif d'impulsion (45) est denté afin d'être entraîné plus facilement par un moteur pour entrer en rotation autour de l'axe (8).

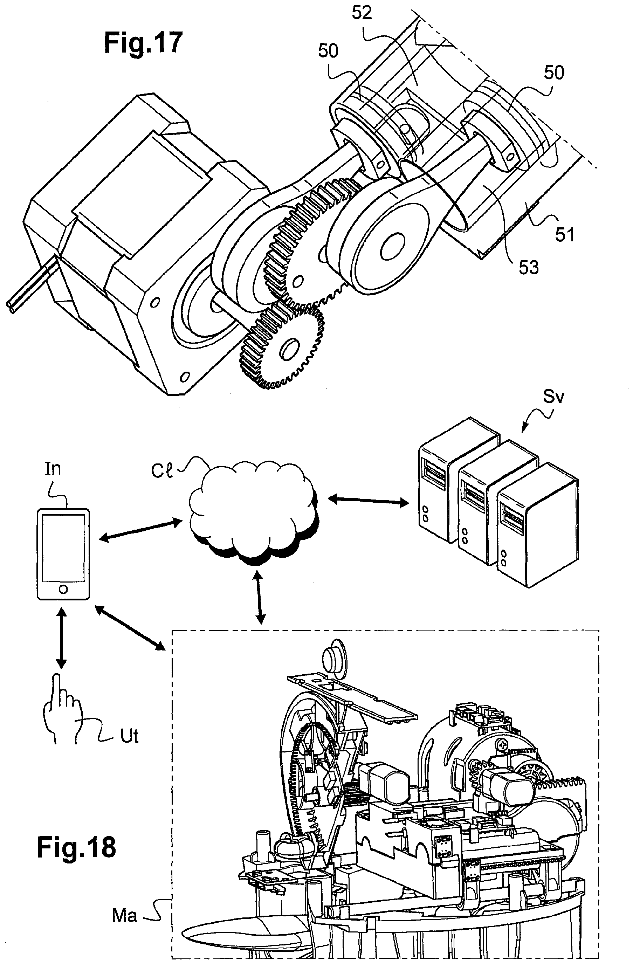

La figure 17 est une vue du dispositif de mélange (51) et des pistons (50) en action, le piston (50).

La figure 18 représente le fonctionnement de l'interface (In) avec le dispositif de fabrication de produit personnalisé selon l'invention (Ma), grâce à l'action d'un utilisateur (Ut) sur ladite interface pour rentrer des données personnalisées.

On décrira maintenant, à titre d'exemple non limitatif, un mode de réalisation en référence aux dessins schématiques annexés dans lesquels :
1- L'utilisateur indique sur l'interface sur son téléphone portable les données personnalisées suivante :
   i. Sexe femme
   ii. Type de peau : sèche
   iii. Présence de rides sur la peau
2- l'algorithme définit une formule de produit personnalisé avec une capsule (103), contenant un actif anti-âge.
3- l'utilisateur insère une capsule (103) comprenant un composant actif anti-âge, à travers l'orifice (1) de la trappe de sécurité (Z) jusqu'à l'emplacement (Y1) du dispositif de sélection (10), le dispositif détecte son type grâce au moyen de détection optique du code d'identification couleur présent sur la capsule
4- Après avoir inséré la ou les capsules (103), l'utilisateur appuyer sur une touche de l'interface sur le dispositif pour lancer la sélection et dosage du composant de base, choisissant par exemple une émulsion huile dans eau, particulièrement adaptée pour les peaux sèches.
5- Le dispositif de sélection et de dosage (44) d'au moins un composant de base contenu dans un pot (11) présente le bon pot (11) devant l'orifice (X'), et réalise le nombre d'impulsions pour délivrer la dose de composant de base correspondant au nombre de capsule (103) détectée pour avoir en finalité un soin de la dose souhaitée, par exemple 1ml pour une utilisation pour un soin cosmétique du visage. Pendant cette étape le dispositif de mélange (51) est dans une position spécifique de «réception composant de base».
6- Ensuite le dispositif de sélection (10) présente la ou les capsules devant l'aiguille creuse (90) pour être percutée et aspirée par le dispositif de mélange (51). Pendant cette étape le dispositif de mélange est dans une position spécifique «aspiration composant actif».
7- Le dispositif de mélange (51) se met en position «mélange», et en fonction des composant de base insérés, le dispositif de mélange (51) réalise un nombre différent d'allers-retours entre les deux réceptacles 52 et 53.
8- Le dispositif de mélange (51) amène le produit personnalisé ainsi obtenu par mélange dans le réceptacle (53). Le chariot déplace le dispositif de mélange (51) au dessus d'un réceptacle de réception du produit fini et le dispositif de mélange (51) distribue ledit produit dans ledit réceptacle de réception. En particulier le dispositif peut détecter l'absence de réceptacle de réception et ne pas délivrer ledit produit tant que ledit réceptacle n'est pas en position de réception du produit.
9- Après avoir distribué le produit, le dispositif de mélange (51) entre dans un cycle de lavage. Les vannes se mettent dans une position pour aspirer l'eau de lavage. Et des cycles spécifiques permettent, un coup le lavage intérieur et extérieur de l'aiguille, et dans un autre cycle, le lavage de la sortie de produit fini.

## Revendications

1. Dispositif pour la fabrication d'un produit cosmétique personnalisé, par mélange d'au moins deux composants logés dans un contenant respectif, au moins un des composant étant un composant actif contenu dans une capsule (103), et au moins un des composant étant un composant de base contenu dans un pot (11) de préférence comprenant un embout pompe (78), au moins un desdits contenant comporte un code d'identification, le dispositif comprenant
- un dispositif de mélange (51)
- un dispositif de sélection et de dosage (44) d'au moins un composant de base contenu dans un pot (11)
- un dispositif de sélection (10) d'au moins un composant actif dans sa capsule (103)
- des moyens de détection (12) dudit code d'identification
- une interface (In) de collecte des données personnalisées pour l'interaction avec l'utilisateur (Ut) pour permettre à l'utilisateur d'indiquer ses données personnalisées, de préférence choisies à partir d'une base de données prédéfinie,
- un dispositif de traitement desdites données comprenant un algorithme pour traiter lesdites données personnalisées afin de définir automatiquement des instructions de fabrication de produit personnalisé pour déterminer au moins un, de préférence tous les composant(s) que doit contenir le produit personnalisé et/ou calculer les quantités desdits composant(s) en fonction desdites données personnalisées, **caractérisé en ce que** lesdites données personnalisées comprennent le nombre d'heure de sport par jour ou par semaine de l'utilisateur et le nombre d'heure de sommeil par nuit de l'utilisateur, et les caractéristiques de la peau de l'utilisateur choisies parmi :
- le type de peau de l'utilisateur choisi parmi : peau sèche, peau grasse, peau mixte, ou peau normale ;
- le phototype de la peau de l'utilisateur ;
- l'éclat du teint de l'utilisateur choisi parmi : teint terne ou teint lumineux ;
- la sensibilité de la peau de l'utilisateur ;
- la présence de rides et/ou ridules sur la peau de l'utilisateur ;
- la présence de tâches sur la peau de l'utilisateur ;
- la fermeté de la peau de l'utilisateur, et/ou ;
- la présence de cernes et/ou poches sur la zone du contour de l'oeil.

2. Dispositif selon la revendication 1, **caractérisé en ce que** l'interface et le dispositif de traitement des données sont dans une unité de commande qui comporte une mémoire qui stocke lesdites données personnalisées et/ou instructions pour la fabrication du produit personnalisé.

3. Dispositif selon la revendication 2, **caractérisé en ce que** l'unité de commande est capable de récupérer automatiquement les informations de l'utilisateur et de l'environnement dans lequel il évolue, par exemple par géolocalisation.

4. Dispositif selon la revendication 2 ou la revendication 3, **caractérisé en ce que** l'unité de commande est choisi parmi un téléphone mobile, une tablette tactile, une montre à écran tactile ou un ordinateur.

5. Dispositif selon l'une quelconque des revendications précédentes **caractérisée en ce qu'**il comprend un dispositif de traitement d'instructions de fabrication pour récupérer lesdites instructions de fabrication de produit personnalisé et communiquer automatiquement lesdites instructions concernant les composants et/ou leurs quantités au dispositif de sélection et de dosage (44) d'au moins un composant de base contenu dans un pot (11) .

6. Méthode de fabrication d'un produit cosmétique personnalisé pour un utilisateur, ladite méthode utilisant un dispositif selon l'une quelconque des revendications précédentes, et comprenant les étapes suivantes :
a. Collecter les données personnalisées dudit utilisateur par l'interface de collecte des données personnalisées;
b. traiter lesdites données personnalisées par un algorithme afin de définir automatiquement les composants, de préférence les composants actifs et/ ou les composants de base, du produit personnalisé et calculer les quantités de chaque composant en fonction des données personnalisées collectées à l'étape a)
c. fournir une formule personnalisée de produit pour ledit utilisateur.
d. Optionnellement envoi de ladite proposition de formule personnalisée de produit au dispositif de fabrication de produit cosmétique automatisé, de manière préférée de manière connectée via internet;
e. Prélèvement de chaque composant défini à l'étape b) de ladite formule de son contenant pour le délivrer dans le dispositif de mélange ;
f. Mélange desdits composants dans ledit dispositif de mélange ;
g. Obtention du produit cosmétique personnalisé pour ledit utilisateur.

7. Méthode selon la revendication 6 **caractérisée en ce que** le ou les composant(s) actif(s) de la formule du produit personnalisé et leur quantité est (sont) définie(s) par un nombre de capsules (103) et type de capsule (103) selon le composant qu'elles contiennent, à insérer dans le dispositif de sélection (10).

8. Méthode selon la revendication 6 ou 7 **caractérisée en ce que** la dose de composant(s) de base de la formule du produit personnalisé est définie par le nombre d'impulsion délivrée par le dispositif de sélection et de dosage (44) sur l'embout pompe (78) du pot (11).

9. Méthode selon l'un quelconque des revendications 6 à 8 **caractérisée en ce que** l'étape c) de fourniture de formule personnalisée de produit pour ledit utilisateur consiste à indiquer à l'utilisateur quelle(s) capsule(s) (103) de composant actif amener au dispositif de mélange (51) à l'étape e), ladite capsule ayant un code d'identification, de préférence un code d'identification couleur, qui quand il sera détecté par un moyen de détection (12) communiquera automatiquement au dispositif de sélection et de dosage (44) quel composant de base prélever dans le pot (11) correspondant, à l'étape e), et dans quelle quantité.

## Patentansprüche

1. Vorrichtung zum Herstellen eines personalisierten Kosmetikprodukts durch Mischen von mindestens zwei in jeweils einem Behälter untergebrachten Komponenten, wobei mindestens eine der Komponenten ein in einer Kapsel (103) enthaltener Wirkstoff ist und mindestens eine der Komponenten eine in einem Topf (11), vorzugsweise umfassend einen Pumpansatz (78), enthaltene Grundkomponente ist, wobei mindestens einer der Behälter einen Identifikationscode enthält, die Vorrichtung umfassend
- eine Mischeinrichtung (51)
- eine Vorrichtung (44) zum Auswählen und Dosieren mindestens einer in einem Topf (11) enthaltenen Grundkomponente
- eine Vorrichtung (10) zum Auswählen mindestens eines Wirkstoffs in ihrer Kapsel (103)
- Erkennungsmittel (12) des Identifikationscodes
- eine Schnittstelle (In) zum Sammeln personalisierter Daten für die Interaktion mit dem Benutzer (Ut), um es dem Benutzer zu ermöglichen, seine personalisierten Daten anzugeben, die vorzugsweise aus einer vordefinierten Datenbank ausgewählt werden,
- eine Vorrichtung zum Verarbeiten der Daten, umfassend einen Algorithmus zum Verarbeiten der personalisierten Daten, um automatisch Herstellungsanweisungen für das personalisierte Produkt zu definieren, um mindestens eine, vorzugsweise alle, der Komponenten zu bestimmen, die das personalisierte Produkt enthalten muss, und/oder die Mengen der Komponenten in Abhängigkeit von den personalisierten Daten zu berechnen,
**dadurch gekennzeichnet, dass die** personalisierten Daten die Anzahl der Sportstunden pro Tag oder pro Woche des Benutzers und die Anzahl der Schlafstunden pro Nacht des Benutzers umfassen und die Eigenschaften der Haut des Benutzers ausgewählt sind aus:
- dem Hauttyp des Benutzers, ausgewählt aus: trockener Haut, fettiger Haut, Mischhaut oder normaler Haut;
- dem Hautfototyp des Benutzers;
- der Ausstrahlung des Teints des Benutzers, ausgewählt aus: glanzlosem Teint oder strahlendem Teint;
- der Hautempfindlichkeit des Benutzers;
- dem Vorhandensein von Falten und/oder Fältchen auf der Haut des Benutzers;
- dem Vorhandensein von Flecken auf der Haut des Benutzers;
- der Hautfestigkeit des Benutzers und/oder;
- dem Vorhandensein von Ringen und/oder Tränensäcken im Bereich der Augenkontur.

2. Vorrichtung nach Anspruch 1, **dadurch gekennzeichnet, dass** die Schnittstelle und die Datenverarbeitungsvorrichtung sich in einer Steuereinheit befinden, die einen Speicher umfasst, der die personalisierten Daten und/oder Anweisungen für die Herstellung des personalisierten Produkts speichert.

3. Vorrichtung nach Anspruch 2, **dadurch gekennzeichnet, dass** die Steuereinheit fähig ist, die Informationen des Benutzers und der Umgebung, in der sie ausgeführt wird, beispielsweise durch Geolokalisierung, automatisch abzurufen.

4. Vorrichtung nach Anspruch 2 oder 3, **dadurch gekennzeichnet, dass** die Steuereinheit aus einem Mobiltelefon, einem Tablet-Computer, einer Touchscreen-Uhr oder einem Computer ausgewählt ist.

5. Vorrichtung nach einem der vorstehenden Ansprüche,
**dadurch gekennzeichnet, dass** sie eine Vorrichtung zum Verarbeiten der Herstellungsanweisungen zum Abrufen der Herstellungsanweisungen für das personalisierte Produkt und zum automatischen Übermitteln dieser Anweisungen bezüglich der Komponenten und/oder ihrer Mengen an die Vorrichtung (44) zum Auswählen und Dosieren mindestens einer in einem Topf (11) enthaltenen Grundkomponente umfasst.

6. Verfahren zum Herstellen eines personalisierten Kosmetikprodukts für einen Benutzer, wobei das Verfahren eine Vorrichtung nach einem der vorstehenden Ansprüche nutzt und die folgenden Schritte umfasst:
a. Sammeln der personalisierten Daten des Benutzers durch die Schnittstelle zum Sammeln personalisierter Daten;
b. Verarbeiten der personalisierten Daten durch einen Algorithmus, um die Komponenten, vorzugsweise die Wirkstoffe und/oder die Grundkomponenten, des personalisierten Produkts zu definieren und die Mengen jeder Komponente in Abhängigkeit von den in Schritt a) gesammelten personalisierten Daten zu berechnen
c. Bereitstellen einer personalisierten Produktformel für den Benutzer.
d. optional Senden des Vorschlags für die personalisierte Produktformel an die Vorrichtung zum Herstellen des automatisierten kosmetischen Produkts, vorzugsweise verbunden über das Internet;
e. Entnehmen jeder in Schritt b) definierten Komponente der Formel aus ihrem Behälter, um sie in die Mischvorrichtung abzugeben;
f. Mischen der Komponenten in der Mischvorrichtung;
g. Erhalten des personalisierten Kosmetikprodukts für den Benutzer.

7. Verfahren nach Anspruch 6, **dadurch gekennzeichnet, dass** der eine oder die mehreren Wirkstoff(e) der Formel des personalisierten Produkts und deren Menge durch eine Anzahl von Kapseln (103) und eine Kapselart (103) gemäß der darin enthaltenen Komponente zum Einsetzen in die Auswahlvorrichtung (10) definiert ist/sind.

8. Verfahren nach Anspruch 6 oder 7, **dadurch gekennzeichnet, dass** die Dosis der Grundkomponente(n) der Formel des personalisierten Produkts durch die Anzahl der Impulse definiert wird, die durch die Auswahl- und Dosiervorrichtung (44) an dem Pumpansatz (78) des Topfes (11) abgegeben werden.

9. Verfahren nach einem der Ansprüche 6 bis 8,
**dadurch gekennzeichnet, dass** Schritt c) des Bereitstellens der Formel des personalisierten Produkts für den Benutzer darin besteht, dem Benutzer anzugeben, welche Kapsel(n) (103) des Wirkstoffs in die Mischvorrichtung (51) in Schritt e) eingeführt werden, wobei die Kapsel einen Identifikationscode, vorzugsweise einen Farbidentifikationscode, aufweist, der bei Erkennung durch ein Erkennungsmittel (12) der Auswahl- und Dosiervorrichtung (44) mitteilt, welche Grundkomponente in dem entsprechenden Topf (11) und in welcher Menge in Schritt e) entnommen werden soll.

## Claims

1. Device for producing a customized cosmetic product, by mixing at least two components which are housed in a respective container, at least one of the components being an active component contained in a capsule (103), and at least one of the components being a base component contained in a pot (11) which preferably comprises a pump nozzle (78), at least one of said containers comprising an identification code, the device comprising
- a mixing device (51)
- a device (44) for selecting and dosing at least one base component contained in a pot (11)
- a device (10) for selecting at least one active component in its capsule (103)
- means (12) for detecting the identification code
- an interface (In) for collecting customized data for interaction with the user (Ut) to allow the user to specify their customized data, preferably selected from a predefined database,
- a device for processing said data, which comprises an algorithm for processing the customized data in order to automatically define instructions for producing a customized product to determine at least one, preferably all of the components to be contained in the customized product and/or to calculate the quantities of said component(s) according to the customized data,
**characterized in that** the customized data comprise the user's number of hours of sport per day or per week and the user's number of hours of sleep per night, and the characteristics of the user's skin selected from:
- the user's skin type, selected from: dry skin, oily skin, combination skin, or normal skin;
- the user's skin phototype;
- the radiance of the user's complexion, selected from: dull complexion or luminous complexion;
- the sensitivity of the user's skin;
- the presence of wrinkles and/or fine lines on the user's skin;
- the presence of blemishes on the user's skin;
- the firmness of the user's skin, and/or;
- the presence of dark circles and/or puffiness in the eye contour area.

2. Device according to claim 1, **characterized in that** the interface and the data processing device are in a control unit which comprises a memory which stores the customized data and/or instructions for producing the customized product.

3. Device according to claim 2, **characterized in that** the control unit is capable of automatically retrieving information about the user and the environment in which they live, for example using geolocation.

4. Device according to claim 2 or claim 3, **characterized in that** the control unit is selected from a cell phone, a touch-sensitive tablet, a touch-screen watch or a computer.

5. Device according to any one of the preceding claims,
**characterized in that** it comprises a device for processing production instructions in order to retrieve said instructions for producing a customized product and automatically communicate the instructions concerning the components and/or the quantities thereof to the device (44) for selecting and dosing at least one base component which is contained in a pot (11).

6. Method for producing a cosmetic product which is customized for a user, said method using a device according to any one of the preceding claims, and comprising the following steps:
a. collecting the user's customized data via the customized data collection interface;
b. processing the customized data using an algorithm in order to automatically define the components, preferably the active components and/or the base components, of the customized product and to calculate the quantities of each component according to the customized data collected in step a);
c. providing a customized product formula for said user;
d. optionally sending the proposed customized product formula to the automated cosmetic product production device, preferably via Internet connection;
e. removing each component defined in step b) of said formula from its container in order to deliver it to the mixing device;
f. mixing the components in the mixing device;
g. obtaining the customized cosmetic product for the user.

7. Method according to claim 6, **characterized in that** the active component(s) of the customized product formula and the quantity thereof is (are) defined by a number of capsules (103) and type of capsule (103) according to the component contained therein, to be inserted into the selection device (10).

8. Method according to claim 6 or claim 7, **characterized in that** the dose of base component(s) of the customized product formula is defined by the number of pulses delivered by the selection and dosing device (44) to the pump nozzle (78) of the pot (11).

9. Method according to any one of claims 6 to 8, **characterized in that** step c) of providing a customized product formula for the user consists in indicating to the user which active component capsule(s) (103) to bring to the mixing device (51) in step e), the capsule having an identification code, preferably a color identification code, which, when detected by a detection means (12), will automatically communicate to the selection and dosing device (44) which base component to take from the corresponding pot (11) in step e), and in what quantity.
